Europäisches Patentamt

European Patent Office

Office européen des brevets

(11) Veröffentlichungsnummer: **0 419 961 A2**

(12) **EUROPÄISCHE PATENTANMELDUNG**

(21) Anmeldenummer: 90117689.1

(22) Anmeldetag: 13.09.90

(51) Int. Cl.[5]: **G06F  12/12**

(30) Priorität: 26.09.89 DE 3932082

(43) Veröffentlichungstag der Anmeldung:
03.04.91 Patentblatt  91/14

(84) Benannte Vertragsstaaten:
**DE FR GB NL SE**

(71) Anmelder: **Siemens Aktiengesellschaft
Wittelsbacherplatz 2**

W-8000 München 2(DE)

(72) Erfinder: **Breintner, Richard, Dipl.-Ing.
Mobil-Oil-Strasse 47
W-8261 Ampfing(DE)**
Erfinder: **Wahr, Alfons, Dipl.-Inf.
Pucher Strasse 52
W-8080 Fürstenfeldbruck(DE)**

(54) Verfahren zur Zuteilungssteuerung, insbesondere für ein digitales, speichernde Elemente enthaltendes System, und Schaltungsanordnung zur Durchführung des Verfahrens.

(57) Ein Verfahren und eine Schaltungsanordnung zur Zuteilungssteuerung, insbesondere für ein digitales, speichernde Elemente enthaltendes System, bei welchem Verfahren zur Kennzeichnung der jeweils vorausgegangenen Folge der Zugriffe auf die Elemente Information in dem System gespeichert wird und bei dem diese Information dazu benutzt wird, aufgrund einer Zugriffsanforderung die gespeicherte Information für eine nachfolgende Zugriffsanforderung zu aktualisieren. Die Information wird in Form einer Start-Operandenkonfiguration in einem jeweils gegebenen Restspeicherplatz der betreffenden speichernden Elemente dargestellt, welche Operandenkonfiguration eine fiktive vorausgegangene Zugriffsfolge repräsentiert. Aufgrund einer Zugriffsanforderung wird die Information zum Einstellen einer neuen Operandenkonfiguration zum Zwecke der Aktualisierung der nun teilweise fiktiven und teilweise realen vorausgegangenen Zugriffsfolge transformiert, wobei die vorausgegangene Zugriffsfolge nach Zugriff auf das bis dahin letzte betreffende speichernde Element vollständig definiert ist.

FIG 3

# VERFAHREN ZUR ZUTEILUNGSSTEUERUNG, INSBESONDERE FÜR EIN DIGITALES, SPEICHERNDE ELEMENTE ENTHALTENDES SYSTEM, UND SCHALTUNGSANORDNUNG ZUR DURCHFÜHRUNG DES VERFAHRENS

Die Erfindung betrifft ein Verfahren und eine Schaltungsanordnung zur Zuteilungssteuerung, insbesondere für ein digitales, speichernde Elemente enthaltendes System, bei welchem Verfahren zur Kennzeichnung der jeweils vorausgegangenen Folge der Zugriffe auf die Elemente Information in dem System gespeichert wird und bei dem diese Information dazu benutzt wird, aufgrund einer Zugriffsanforderung die gespeicherte Information für eine nachfolgende Zugriffsanforderung zu aktualisieren.

Die Erfindung ist insbesondere vorteilhaft anwendbar auf die Realisierung von Ersetzungsstrategien bei teilassoziativen Speicherbankanordnungen. Solche Anordnungen kommen bei Cache-Speichern und ATM's (A ddress T ranslation M emory) vor. Übliche Ersetzungsstrategien sind beispielsweise durch den bekannten LRU-(L east R ecently U sed)-Mechanismus, das einfachere FIFO-(F irst I n F irst O ut)-Prinzip oder das sog. Random-Verfahren als wirtschaftlichste Lösung realisiert. Welche der zwei zuerst genannten Strategien benutzt wird, ist für die Erfindung ohne Bedeutung. Anstelle des Random-Verfahrens ist je nach Anwendungsfall eventuell der LRU-Mechanismus vorzuziehen.

Aus Gründen der Einfachheit und zum besseren Verständnis wird im folgenden nur auf das zumeist angewandte LRU-Verfahren Bezug genommen. Dieses Verfahren dient zum Ermitteln der Speicherzelle derjenigen assoziativen Speicherbank, die am längsten nicht mehr benutzt wurde. Immer wenn im folgenden auf den LRU-Mechanismus Bezug genommen wird, kann also dort auch eine beliebige andere Strategie eingesetzt sein.

Die Erfindung ist nur dann sinnvoll anzuwenden, wenn bei benutzten Tag-Speichern (Etiketten-Speichern) ein RAM-Chip- Anteil genügender Bit-Breite unbenutzt verbleibt und wenn die Anzahl der assoziativen Speicherbänke kleiner oder gleich fünf, höchstens jedoch sieben beträgt.

Lösungen nach dem Stand der Technik benötigen außer einer Steuerlogik einen separaten Speicher, in dem bei jeder Zellenadresse die Strategie-Parameter abgespeichert sind.

Derartige Lösungen weisen den Nachteil eines relativ großen und unwirtschaftlichen Systemaufbaues auf.

Der vorliegenden Erfindung liegt die Aufgabe zugrunde, ein Verfahren und eine Anordnung der eingangs genannten Art zu schaffen, die die Ersetzungsstrategie in bauteilesparender und wirtschaftlicher Art und Weise realisieren kann.

Zur Lösung der Aufgabe wird ein Verfahren der eingangs genannten Art und gemäß dem Oberbegriff des Patentanspruchs 1 vorgeschlagen, das durch die in dem kennzeichnenden Teil dieses Patentanspruchs angegebenen Schritte charakterisiert ist.

Vorteilhafte Weiterbildungen des erfindungsgemäßen Verfahrens sind durch die in den auf den Patentanspruch 1 mittelbar oder unmittelbar rückbezogenen Unteransprüchen angegebenen Merkmale gekennzeichnet.

Zur Lösung der Aufgabe wird außerdem eine Schaltungsanordnung zur Durchführung des Verfahrens gemäß dem Oberbegriff des Patentanspruchs 8 vorgeschlagen, die durch die in dem kennzeichnenden Teil dieses Patentanspruches angegebenen Merkmale charakterisiert ist.

Vorteilhafte Weiterbildungen der erfindungsgemäßen Schaltungsanordnung sind durch die in den auf diesen Patentanspruch rückbezogenen Unteransprüchen angegebenen Merkmale gekennzeichnet.

Lösungsidee:

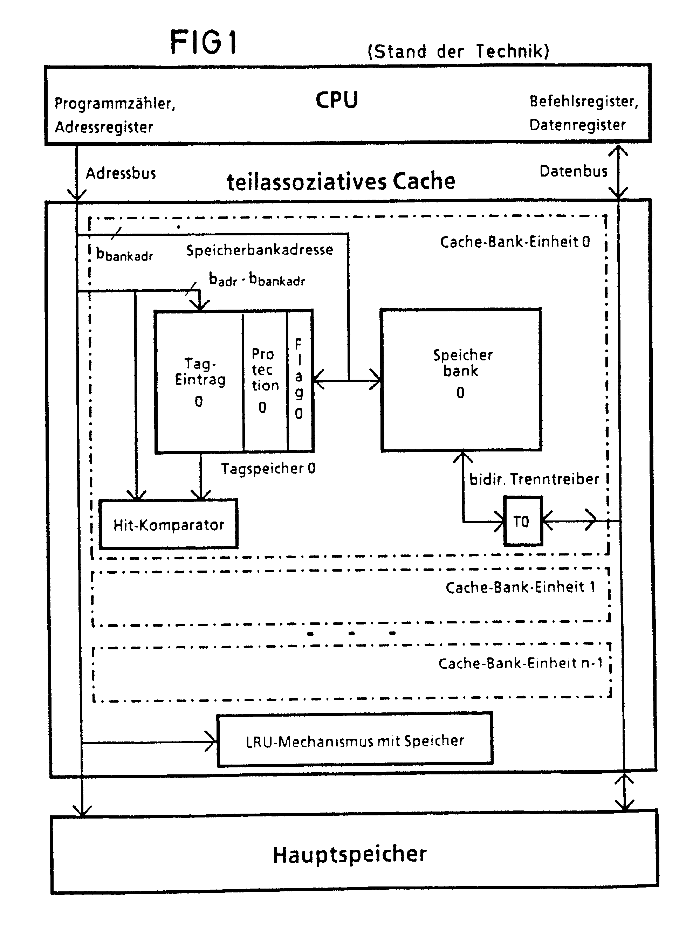

Entwickelt man z. B. ein Cache mit mehreren assoziativen Cache- Bänken (vergl. Fig. 1), so benötigt man für jede Cache-Bank einen zugehörigen Tag-Speicher. Dieser Tag-Speicher ist zur Identifizierung einer assoziativen Cache-Bank für einen Zugriff der Art "READ-HIT" oder "WRITE-HIT" nötig. Bei einem "READ-MISS" ist in keinem der Tag-Speicher der betroffene Teil der aktuellen Zugriffsadresse enthalten. In diesem Fall wird nach dem LRU-Mechanismus diejenige Cache-Bank ausgewählt, deren Zelleninhalt der älteste von allen assoziativen Cache-Bänken ist. Dieser Zelleninhalt wird mit dem vom Hauptspeicher gelesenen Datum überschrieben, und in den zugehörigen Tag-Speicher wird der betroffene Teil der aktuellen Zugriffsadresse eingetragen.

Die Breite des Tag-Speichers $b_{tag}$ wird bestimmt durch die Breite der Zugriffsadresse $b_{adr}$, der Tiefe $2^{**}b_{bankadr}$ der relaisierten Cache-Bänke und der Anzahl von Bits für "Protection-Checks" und "Valid-Flags":

$$b_{tag} = b_{adr} - b_{bankadr} + b_{protection + valid} \quad (1)$$

2

Wegen der kurzen Zugriffszeit und Wegfall der Refresh-Steuerung werden für Cache-Bänke statische RAM's benutzt. Durch die heute mögliche Großintegration bei der Halbleiterspeicher-Herstellung und bedingt durch die gewählte Cache-Banktiefe $2^{\text{bankadr}}$ werden häufig SRAM's mit einer Breite von mehr als einem Bit verwendet. Werden für die Tag-Speicher solche SRAM's eingesetzt, bleibt je nach Wert von $b_{tag}$ ein Rest, der normalerweise unbenutzt bleibt.

Der vorliegenden Erfindung liegt die Idee zugrunde, diesen Rest in einem SRAM-Chip für den LRU-Mechanismus anstelle eines zusätzlichen LRU-Speichers zu benutzen.

Dies ist jedoch nur möglich, wenn dieser Chip-Rest genügend breit ist. Ist dies nicht der Fall, dann ist die konventionelle Lösung günstiger, da sonst an jeden Tag-Speicher ein zusätzliches SRAM-Chip angefügt werden müßte, was in aller Regel einen höheren Aufwand als ein separater LRU-Speicher bedeutet.

Die Anzahl der minimal benötigten Bits $b_{LRU}$ in den Tag-Speichern ist abhängig von der Anzahl n der assoziativen Cache-Bänke. Diese Bit-Breite $b_{LRU}$ ergibt sich aus dem aufgerundeten Wert des logarithmus dualis über die Anzahl p der möglichen Permutationen. Eine Permutation legt die Reihenfolge fest, mit der auf die assoziativen Cache-Bänke zugegriffen wurde. Die Anzahl der möglichen verschiedenen Permutationen ist $p = n!$ (2)

Die Berechnungsformel für die Anzahl der minimal benötigten Bits ist dann

$b_{LRU}$ = entier [log2(p)] (3)

In nachfolgender Tabelle 1 sind die Werte im sinnvollen Wertebereich von n ersichtlich:

Tabelle 1:

| Anzahl assoz. Speicherbänke | max. Anzahl der Permutationen | benötigte Bitbreite |
|---|---|---|
| n | p | $b_{LRU}$ |
| 2 | 2 | 1 |
| 3 | 6 | 3 |
| 4 | 24 | 5 |
| 5 | 120 | 7 |
| 6 | 720 | 10 |
| 7 | 5040 | 13 |
| Werte für $b_{LRU}$ | | |

Um den Vorteil, nämlich die Einsparung eines separaten LRU-Speichers, nicht zu schmälern, soll die Ansteuerlogik der assoziativen Cache-Bänke möglichst wenig verändert, bzw. erweitert werden (siehe weiter unten "Ansteuerung der Tag-SRAM's"). Bei einem READ-/WRITE-Zugriff auf eine der assoziativen Cache-Bänke soll vielmehr nur der LRU-Eintrag der selektierten Bank verändert werden.

In jeder der assoziativen Cache-Bankeinheiten stehen im Tag-Speicher wenigstens $b_{LRU}$ Bits zur Verfügung. Die eingetragenen Werte in den $b_{LRU}$ Bits aller Cache-Bänke müssen auf irgend eine Art und Weise durch eine Abbildung die aktuelle Permutation beschreiben. Erfolgt nun ein Zugriff auf eine der Cache-Bänke, dann muß in dieser der LRU-Eintrag durch einen neuen Wert überschrieben werden, der nun seinerseits mit Hilfe der Abbildung die neue Permutation richtig wiedergibt. Die Lösungsaufgabe besteht darin, eine geeignete Abbildung zu finden und die LRU-Eintragswerte zu definieren.

Die mathematisch elementarste geeignete Gruppe ist: als Abbildung die Addition, definiert auf der Menge von Restklassen modulo p. Eine Restklasse $q_x$ ist die Menge aller positiven und negativen ganzen Zahlen, die bei entsprechend richtig definierter Division durch p den Rest x haben, und wenn gilt: $0 \leq x\ p \leq$ p-1. Die Verbindung zwischen den Restklassen und den Permutationen ist dadurch herzustellen, daß alle möglichen Permutationen mit den Zahlen q = 0,...,p-1 durchnumeriert werden:

Tabelle 2:

| Permutationen der Cache-Banke | Restklasse |
|---|---|
| (3. jüngste = älteste, 2.jüngste = jüngste | q |
| (0, 1, 2) | 0 |
| (0, 2, 1) | 1 |
| (1, 0, 2) | 2 |
| (1, 2, 0) | 3 |
| (2, 0, 1) | 4 |
| (2, 1, 0) | 5 |
| Beispiel für n = 3 (p = 6) | |

Anfangssituation:

Addiert man alle LRU-Einträge $w_0 i, ..., w_{n-1} i$ und bildet vom Ergebnis den Rest bezüglich $2^{**} b_{LRU}$, so erhält man einen Zahlenwert $q^i$ der im Wertebereich 0,... ,p-1 liegt (Anmerkung: $p \leq 2^{**}_{LRU}$). $q^i = (W_0 i + w_1 i + \bullet\bullet\bullet + w_{n-1} i) \bmod 2^{**} b_{LRU}$ mit: $0 \leq q^i \leq p-1$ und $0 \leq w_k i \leq (2^{**} b_{LRU} - 1)(4)$

Zugriff:

Wird zum Zeitpunkt i auf die Cache-Bank j zugegriffen, so ergibt dies eine neue Permutation $l^{i+1}$, die sich aus j und der vorherigen Permutation $q^i$ herleitet
$q^{i+1} = f(j, q^i)$ mit: $0 \leq q^{i+1} \leq p-1$     (5)
Nach dem Einschreiben in die Cache-Bank j, wenn also der LRU-Eintrag $w_j i$ mit dem neuen Wert $w_j i + 1$ überschrieben ist, muß gelten
$q^{i+1} = (w_0 i + 1 + ... + w_j^{i+1} + ... + w_{n-1} i + 1) \bmod 2^{**} b_{LRU}$     (6)
Bis auf den Eintrag $w_j i + 1$ sind aber alle übrigen unverändert geblieben, d. h.:
$w_k^{i+1} = w_k^i$     für $0 \leq k \leq n-1$ und $k \neq j$     (7)
Die neue Restklasse errechnet sich somit aus (6) durch Einsetzen von (7) und (4)
$q^{i+1} = (q^i - w_j^i + w_j^{i+1}) \bmod 2^{**} b_{LRU}$     (8)
Hieraus und aus (5) für die Funktion der Permutationsveränderung bzgl. des Zugriffs auf das Element j kann nun der neue LRU-Eintrag berechnet werden
$w_j^{i+1} = (q^{i+1} - q^i + w_j^i) \bmod 2^{**} b_{LRU}$     (9)
Wie aus dieser Gleichung ersichtlich, kann der Ausdruck zwischen den Klammern positive und negative Werte annehmen. Das Ergebnis hat durch die Modulo-Funktion positive Werte für $w_j^{i+1}$ zwischen $0, ..., 2^{**} b_{LRU} - 1$.

Initialisierung:

Sind nicht alle assoziativen Cache-Bankelemente besetzt, so ist die Liste der Permutationswerte noch nicht vollständig definiert. Die noch nicht definierten Werte werden durch die Valid-Flags in den zugehörigen Cache-Bankelementen bestimmt. Entsprechend der Sequenz der Eintragungen ist die Permutationsliste von links nach rechts aufzubauen. Hierbei ist bedeutungslos, welche Wertvorbesetzungen $w_k 0$ in den LRU-Einträgen enthalten sind. Denn einzig von Bedeutung sind die Permutationen $q^{i+1}$, und diese können durch den zuletzt eingetragenen Wert $w_j^{i+1}$ stets auf den richtigen Wert gebracht werden.

Ansteuerung der Tag-SRAM's:

Die Zugriffsarten auf die assoziativen Cache-Bänke und die zugehörigen Steuervorgänge sind in der nachfolgenden Tabelle zusammengestellt:

| Zugriffsart: | durchzuführende Steueraktion: |
|---|---|
| WRITE-MISS | im Cache nichts<br>Datum im Hauptspeicher eintragen |
| WRITE-HIT | LRU-Eintrag $w_j^{i+1}$ eintragen 1)<br>Datum (eventuell Teilwort) in Speicherbank<br>eintragen<br>Datum im Hauptspeicher eintragen |
| READ-MISS | j nach $q^i$ bzw. Valid-Flags auswählen<br>LRU-Eintrag $w_j i+1$ eintragen<br>Datum aus Hauptspeicher auslesen und an CPU<br>senden<br>Datum in Speicherbank j eintragen |
| READ-HIT | LRU-Eintrag $w_j^{i+1}$ eintragen 1)<br>Datum aus Speicherbank j lesen und an CPU<br>senden |

Tabelle 2: Cache-Ansteuerungs-Fälle

1) Der WRITE-HIT- und der READ-HIT-Fall sind die Situation für eine zusätzlich nötige Ansteuer-Maßnahme gemäß der Erfindung: Während der Tag-Eintrag für den Hit-Komparator ausgelesen wird, muß zu gleicher Zeit der neue LRU-Eintrag $w_j^{i+1}$ eingetragen werden. Das bedeutet,daß auf einen SRAM-Chip zur gleichen Zeit lesend und schreibend zugegriffen werden müßte. Solche Bausteine stehen allerdings nicht als One-Port-RAM zur Verfügung. Dieses Problem läßt sich jedoch durch eine einfache Modifikation in der Ansteuerung des Trenntreibers für Tag-, Protection- und Valid-Flag-Einträge lösen. So kann der neue LRU-Eintrag geschrieben werden, während in die anderen Speicherstellen der unveränderte Tag-Eintrag wieder übernommen wird.

Erfindungsgemäß ist zur Erzielung der angestrebten Zuteilungssteuerung im einzelnen ein Verfahren der eingangs genannten Art vorgesehen, das Schritte aufweist zum - Speichern der Information in Form einer Start-Operandenkonfiguration in einem jeweils gegebenen Restspeicherplatz der betreffenden speichernden Elemente, welche Operandenkonfi guration eine fiktive vorausgegangene Zugriffsfolge repräsentiert,
- Transformieren der Information aufgrund einer Zugriffsanforderung zum Einstellen einer neuen Operandenkonfiguration zum Zwecke der Aktualisierung der nun teilweise fiktiven und teilweise realen vorausgegangenen Zugriffsfolge, wobei die vorausgegangene Zugriffsfolge nach Zugriff auf das bis dahin letzte betreffende speichernde Element vollständig definiert ist,

- Zugreifen auf dasjenige speichernde Element, das aus der fiktiven, der teilweise fiktiven oder der vollständig definierten vorausgegangen Zugriffsfolge als zu überschreibendes Element nach dem Transformieren ausgewählt ist, und
- Transformieren der die fiktive, teilweise fiktive oder vollständig definierte vorausgegangenen Zugriffsfolge repräsentierenden Information mit Hilfe einer das ausgewählte speichernde Element bestimmenden Information zum Aktualisieren der vorausgegangenen Zugriffsfolge.

Die Start-Operandenkonfiguration wird im Regelfall beim Initialisieren des Systems zufallsbedingt bestimmt.

Erfindungsgemäß kann die Start-Operandenkonfiguration jedoch zu Prüfzwecken gezielt bestimmt werden.

Eine Änderung der Operanden-Konfiguration kann durch Neueinstellung des Operanden desjenigen speichernden Elements, auf das zugegriffen wird, oder durch Neueinstellung der Operanden all derjenigen speichernden Elemente, auf die nicht zugegriffen wird, durchgeführt werden. Das Transformieren der Information erfolgt vorzugsweise mittels eines Algorithmus oder mittels einer Verknüpfungsvorschrift.

Im folgenden wird die Erfindung anhand mehrerer Figuren, die den Stand der Technik bzw. bevorzugte Ausführungsbeispiele betreffen, im einzelnen beschrieben.

Fig. 1 zeigt eine Standard-Architektur eines Cache-Speichers mit teilassoziativen Speichern in einer Rechnerumgebung, mit separatem Ersetzungsstrategie-Speicher nach dem Stand der Technik.

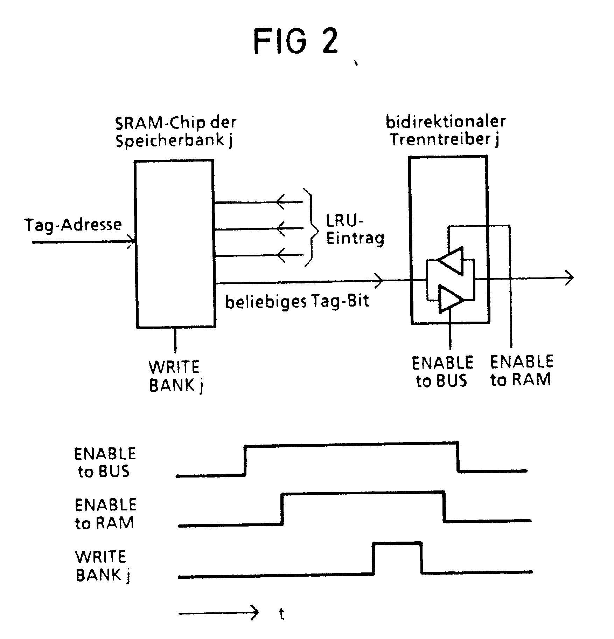

Fig. 2 zeigt beispielhaft eine mögliche Ausführungsform einer Schaltungsanordnung für eine SRAM-Chip-Ansteuerung gemäß der Erfindung.

Fig. 3 zeigt ein Blockschaltbild mit einer für die Erfindung bevorzugten Schaltungsarchitektur.

Fig. 4 zeigt ein Blockschaltbild, das eine komprimierte Schaltungsanordnung gemäß der Erfindung betrifft.

Fig. 5 zeigt eine optimale Schaltungsanordnung gemäß der Erfindung für den speziellen Fall $n = 2$.

## Schaltungsanordnung:

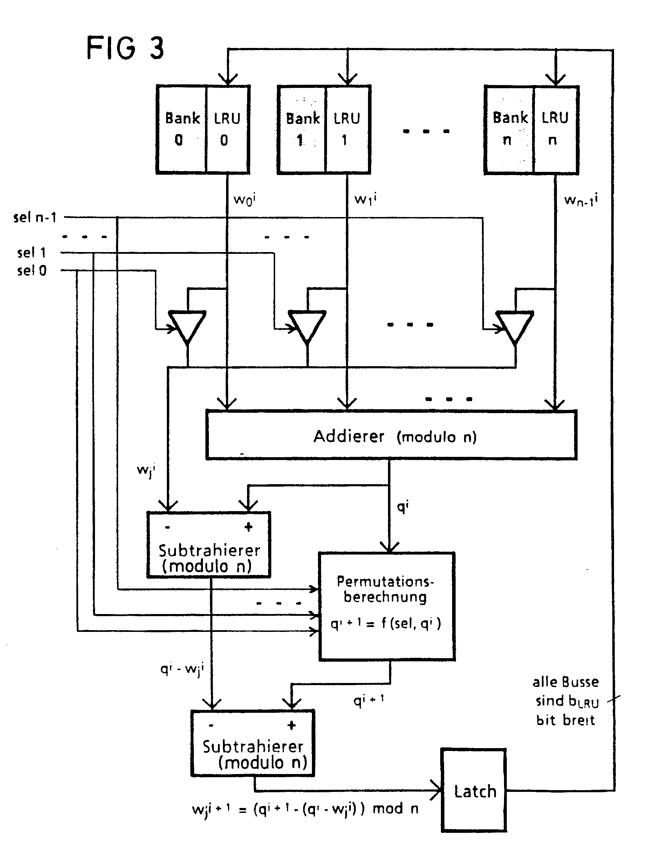

Gemäß Fig. 3 entspricht jeder LRU-Block einer konkreten Hardwareschaltung, für deren Aufbau (der nicht Gegenstand der Erfindung ist) keine Einschränkungen gemacht werden müssen (d. h., daß hier verschiedene Schaltungsvarianten möglich sind.) Mit einem Signal sel i wird eine der Bänke ausgewählt, abgeleitet aus der Hit-Logik und LRU-Information.

## Komprimierte Schaltungsanordnung:

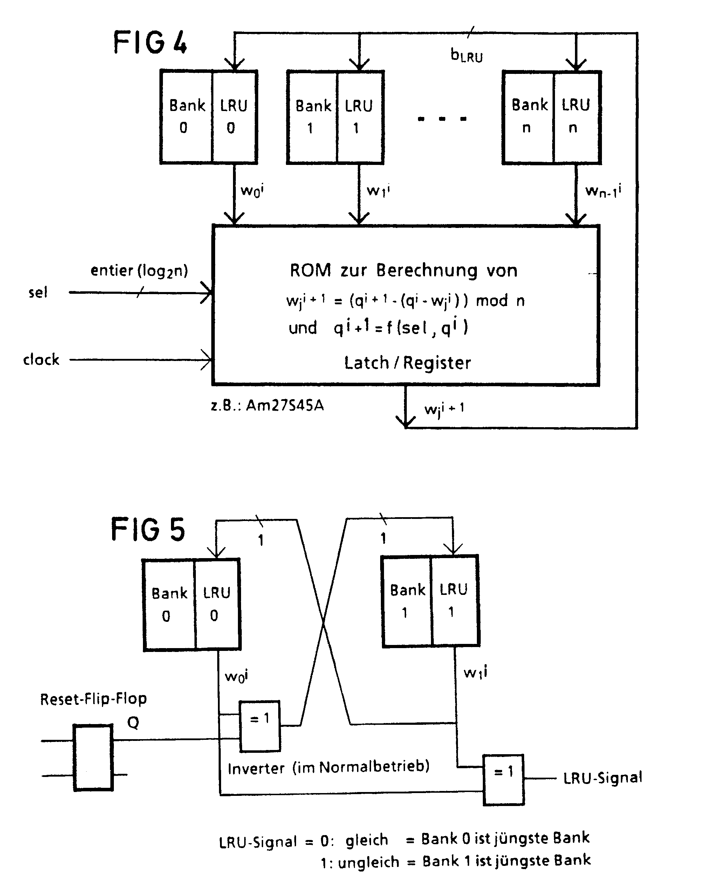

Gemäß Fig. 3 sind in der Schaltungsanordnung alle logisch notwendigen Komponenten enthalten. Diese müssen jedoch nicht unbedingt als separate Hardware-Einheiten vorhanden sein. Mehrere Komponenten können in eine Einheit integriert werden. Im Extremfall, bei $n \leq 3$, können bis auf die Speicher alle Komponenten in ein einziges Bauteil integriert sein (s. Fig. 4). Hier sind die Permutationsberechnung, die Additionen und Subtraktionen, wie auch die Selektion des gültigen $w_j^i$ in die Daten eines ROM's hineingerechnet, der zugleich ein Latch, bzw. Register enthält.

Diese Schaltungsanordnung kommt bei $n = 2$ mit einem Baustein z. B. vom Typ Am27S25A (512 x 8,Generic Series Bipolar IMOX Registered PROM) aus. Nötig sind 2x1 bit für die $w_x i$-Eingänge und ein Bit für die Selektion, also eine 8x1-Organisation und ein Flip-Flop. Hier sind jedoch andere Schaltungsanordnungen noch effizienter (vergl. "Schaltungsanordnung für den Sonderfall $n = 2$").

Bei $n = 3$ kommt diese Schaltungsanordnung mit einem Baustein z. B. vom Typ Am27S45A (2048 x 8, Generic Series Bipolar IMOX Registered PROM) aus. Nötig sind 3 x 3 bit für die $w_x^i$-Eingänge und zwei bit für die kodierte Selektion, also eine 2048x3-Organisation und ein Register. Hier ist diese Schaltungsanordnung also sehr effizient.

Für $n = 4$ kommt diese Schaltungsanordnung nicht mehr in Frage, denn es wäre eine $2^{23}$x5-Organgisation notwendig.

## Schaltungsanordnung für den Sonderfall $n = 2$:

Wenn $n = 2$ ist, wird die Schaltungsanordnung besonders einfach, denn die Addition, die Subtraktion und die Permutationsberechnung kann jeweils mit einem Exclusiv-Oder-Gatter gebildet werden. Zusätzlich können diese auch noch zusammengefaßt werden, wie dies in Fig. 4 gezeigt ist.

Eigenschaften:

-Vorhandene SRAM-Chip-Reste in den Tagspeichern können ausgenutzt werden. Die Ansteuerlogik für die Tagspeicher wird etwas aufwendiger, da die Tag- und LRU-Logik miteinander vermischt sind, dafür entfällt die komplette LRU-Steuerung und der separate LRU-Speicher.

-Der Mehraufwand für die Tagspeicher-Ansteuerung zeigt sich vor allem bei den Entwicklungs- und Testaufwendungen. Der Bausteinaufwand dagegen kann eventuell ganz entfallen, wenn die zusätz liche Steuerlogik in die PAL's oder LSI's der sonst nötigen Tagspeicher-Steuerung integriert werden kann. Der Mehraufwand für die Tagspeicher-Ansteuerung ist normalerweise geringer als der eines selbständigen LRU-Speichers zusammen mit seiner Ansteuerung.

-Vorteilhaft ist, daß bei n = 3 die Anordnung gemäß Fig. 3 zusammengefaßt in einen Baustein integriert werden kann (vergl. Fig. 4).

-Für n = 2 ist die Schaltungsanordnung besonders wirtschaftlich zu realisieren (vergl. Fig. 5).

Die Erfindung ist nicht auf die in den Figuren gezeigten Schaltungsanordnungen beschränkt. Die gezeigten Schaltungsanordnungen stellen lediglich bevorzugte Ausführungsformen dar.

**Ansprüche**

1. Verfahren zur Zuteilungssteuerung, insbesondere für ein digitales, speichernde Elemente enthaltendes System, bei welchem Verfahren zur Kennzeichnung der jeweils vorausgegangenen Folge der Zugriffe auf die Elemente Information in dem System gespeichert wird und bei dem diese Information dazu benutzt wird, aufgrund einer Zugriffsanforderung die gespeicherte Information für eine nachfolgende Zugriffsanforderung zu aktualisieren,
**dadurch gekennzeichnet,**
daß Schritte vorgesehen sind, zum
- Speichern der Information in Form einer Start-Operandenkonfiguration in einem jeweils gegebenen Restspeicherplatz der betreffenden speichernden Elemente, welche Operandenkonfiguration eine fiktive vorausgegangene Zugriffsfolge repräsentiert,
- Transformieren der Information aufgrund einer Zugriffsanforderung zum Einstellen einer neuen Operandenkonfiguration zum Zwecke der Aktualisierung der nun teilweise fiktiven und teilweise realen vorausgegangenen Zugriffsfolge, wobei die vorausgegangene Zugriffsfolge nach Zugriff auf das bis dahin letzte betreffende speichernde Element vollständig definiert ist,
- Zugreifen auf dasjenige speichernde Element, das aus der fiktiven, der teilweise fiktiven oder der vollständig definierten vorausgegangen Zugriffsfolge als zu überschreibendes Element nach dem Transformieren ausgewählt ist, und - Transformieren der die fiktive, teilweise fiktive oder vollständig definierte vorausgegangenen Zugriffsfolge repräsentierenden Information mit Hilfe einer das ausgewählte speichernde Element bestimmenden Information zum Aktualisieren der vorausgegangenen Zugriffsfolge.
2. Verfahren nach Anspruch 1,
**dadurch gekennzeichnet,** daß die Start-Operandenkonfiguration beim Initialisieren des Systems zufallsbedingt bestimmt wird.
3. Verfahren nach Anspruch 1,
**dadurch gekennzeichnet,**
daß die Start-Operandenkonfiguration zu Prüfzwecken gezielt bestimmt wird.
4. Verfahren nach Anspruch 1,
**dadurch gekennzeichnet,**
daß eine Änderung der Operanden-Konfiguration durch Neueinstellung des Operanden desjenigen speichernden Elements, auf das zugegriffen wird, durchgeführt wird.
5. Verfahren nach Anspruch 1,
**dadurch gekennzeichnet,**
daß eine Änderung der Operanden-Konfiguration durch Ändern der Operanden all derjenigen speichernden Elemente, auf die nicht zugegriffen wird, durchgeführt wird.
6. Verfahren nach Anspruch 1,
**dadurch gekennzeichnet,**
daß das Transformieren der Information mittels eines Algorithmus erfolgt.

7

7. Verfahren nach Anspruch 1,

**dadurch gekennzeichnet,**

daß das Transformieren der Information mittels einer Verknüpfungsvorschrift erfolgt.

8. Schaltungsanordnung zur Durchführung des Verfahrens,

**gekennzeichnet** durch

- n Speicher-Bänke mit $b_{LRU}$ bit-breiten LRU-Einträgen $w_k^i$
- einem sel j aktivierten Selektor für $w_j^i$ Einträge,
- einen $b_{LRU}$ bit-breiten Addierer (modulo n), der physikalisch z.B. durch eine binärbaumartige Kaskadenschaltung implementierbar ist und
- einen Funktionsblock zur Permutationsberechnung, in dem ausgehend von sel und der augenblicklichen Permutation $q^i$ eine neue Permutation $q^{i+1}$ ermittelt wird.

9. Schaltungsanordnung nach Anspruch 8,

**dadurch gekennzeichnet,**

daß der Funktionsblock aus einem Permutationsberechnungsbaustein mit der Funktion $q^{i+1} = f(sel, q^i)$, einem ersten modulo n-Subtrahierer und einem zweiten modulo n-Substrahierer besteht, wobei dem ersten Subtrahierer die Größen $w_j^i$ und $q^i$ zur Differenzbildung zwischen diesen zugeführt werden und wobei dem zweiten Subtrahierer die Größen $q^i\text{-}w_j^i$ und $q^{i+1}$ zur Differenzbildung zwischen diesen zugeführt werden.

10. Schaltungsanordnung nach Anspruch 9,

**dadurch gekennzeichnet,**

daß zwischen den Ausgang des zweiten Subtrahierers und den Eingängen der Speicherbänke eine Halteschaltung (Latch) geschaltet ist, um die Bildung von Schwingungen in dem Rückkopplungssystem zu verhindern.

# FIG 1 (Stand der Technik)

**CPU**

Programmzähler, Adressregister

Befehlsregister, Datenregister

Adressbus

**teilassoziatives Cache**

Datenbus

$b_{bankadr}$    Speicherbankadresse

Cache-Bank-Einheit 0

$b_{adr}$ - $b_{bankadr}$

Tag-Eintrag 0 | Protection 0 | Flag 0

Speicher bank 0

Tagspeicher 0

Hit-Komparator

bidir. Trenntreiber

T0

Cache-Bank-Einheit 1

Cache-Bank-Einheit n-1

LRU-Mechanismus mit Speicher

**Hauptspeicher**

# FIG 2

SRAM-Chip der
Speicherbank j

bidirektionaler
Trenntreiber j

Tag-Adresse

LRU-
Eintrag

beliebiges Tag-Bit

WRITE
BANK j

ENABLE
to BUS

ENABLE
to RAM

ENABLE
to BUS

ENABLE
to RAM

WRITE
BANK j

t

# FIG 3

Bank 0 | LRU 0    Bank 1 | LRU 1    • • •    Bank n | LRU n

$w_0^i$      $w_1^i$      $w_{n-1}^i$

sel n-1   - - -

sel 1

sel 0

• • •

**Addierer (modulo n)**

$w_j^i$

$q^i$

**Subtrahierer (modulo n)**

—    +

**Permutations-berechnung**

$q^{i+1} = f(\text{sel}, q^i)$

- - -

$q^i - w_j^i$

$q^{i+1}$

alle Busse sind $b_{LRU}$ bit breit

**Subtrahierer (modulo n)**

—    +

**Latch**

$w_j^{i+1} = (q^{i+1} - (q^i - w_j^i)) \bmod n$

# FIG 4

Bank 0 | LRU 0

Bank 1 | LRU 1

· · ·

Bank n | LRU n

$b_{LRU}$

$w_0^i$

$w_1^i$

$w_{n-1}^i$

sel

entier $(\log_2 n)$

clock

ROM zur Berechnung von

$$w_j^{i+1} = (q^{i+1} - (q^i - w_j^i)) \bmod n$$

und $q^{i+1} = f(sel, q^i)$

Latch / Register

z.B.: Am27S45A

$w_j^{i+1}$

# FIG 5

1

1

Bank 0 | LRU 0

Bank 1 | LRU 1

$w_0^i$

$w_1^i$

Reset-Flip-Flop

Q

= 1

Inverter (im Normalbetrieb)

= 1

LRU-Signal

LRU-Signal = 0: gleich = Bank 0 ist jüngste Bank

1: ungleich = Bank 1 ist jüngste Bank